# FASCICULE DE BREVET EUROPEEN

(11) **EP 0 862 013 B1**
(45) Date de publication et mention de la délivrance du brevet: **27.03.2002**
(21) Numéro de dépôt: 98400080.2
(22) Date de dépôt: 16.01.1998
(51) Int. Cl.: F16L 55/033, F01N 7/18, B60K 13/04

(54) **Dispositif de suspension élastique pour tubulure d'échappement**
Elastische Aufhängungsvorrichtung für ein Auspuffrohr
Elastic suspension device for exhaust pipe

(30) Priorité: 17.01.1997 FR 9700474
(43) Date de publication de la demande: 02.09.1998
(73) Titulaire: HUTCHINSON, 75008 Paris (FR)
(72) Inventeur: Larmande, Franck, 28200 Chateaudun (FR); Roquain, Christophe, 72120 Saint Lalais (FR)
(74) Mandataire: Picard, Jean-Claude Georges

(56) Documents cités:
- EP-A- 0 531 193
- EP-A- 0 710 769
- DE-A- 4 439 631
- US-A- 5 398 907

## Description

La présente invention concerne un dispositif de suspension élastique pour tubulure d'échappement de véhicule ayant un moteur à combustion interne, comprenant un corps élastique muni de moyens d'accrochage d'une part à la caisse du véhicule, d'autre part à ladite tubulure.

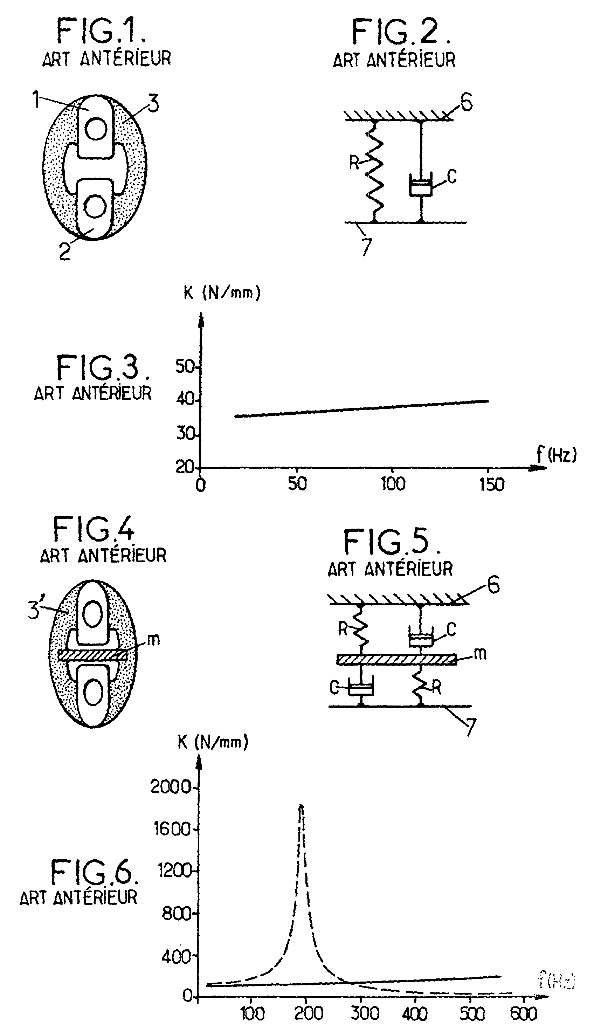

Un dispositif de ce type est connu par exemple du document EP-0 531 193-A, et est représenté à la figure 1 du dessin ci-annexé, la figure 2 représentant le schéma théorique et la figure 3 le diagramme de la raideur obtenue K en fonction de la fréquence f des vibrations s'exerçant entre les moyens d'accrochage 1 et 2 du corps élastique 3 du dispositif, par exemple en caoutchouc. On voit sur la figure 2 que ce dispositif se comporte comme un ressort R en parallèle avec un amortisseur C, le tout étant monté entre la caisse 6 d'un véhicule automobile et sa tubulure d'échappement 7. L'inconvénient de cette technique antérieure est visible sur la figure 3 et réside dans la rigidification dynamique, la raideur K augmentant avec la fréquence f. Il y a un mauvais amortissement des modes du ralenti, et du hachis de ligne, c'est-à-dire du premier mode d'excitation de la tubulure d'échappement, entre environ 8 et 15 Hz.

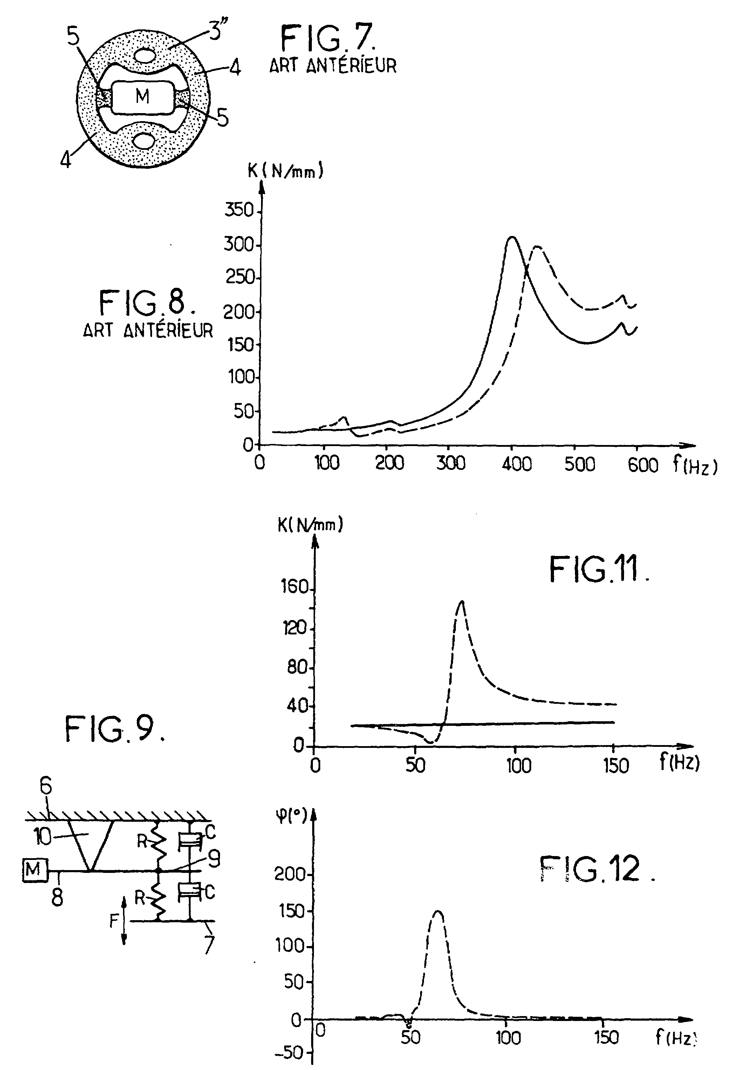

Une autre technique, représentée schématiquement avec référence aux figures 4 à 6, respectivement analogues aux figures 1 à 3, fait appel à un batteur simple : le corps élastique 3' du dispositif incorpore un batteur m. Sur la figure 6 la réponse en trait plein est celle du dispositif sans masse additionnelle, analogue à celle de la figure 3, et la réponse en tirets est celle du dispositif avec adjonction de la masse m. La comparaison des deux courbes montre qu'on améliore la filtration des fibrations à haute fréquence (diminution sensible de la raideur K au-delà de 300 Hz), mais ceci au détriment des fréquences basses. Notamment on obtient un pic de raideur très gênant vers 200 Hz ; de plus, là encore il y a un mauvais amortissement du hachis de ligne et des modes du ralenti.

Selon encore une autre technique connue, représentée à la figure 7, le corps élastique 3" du dispositif comporte entre ses deux bras filtrants latéraux 4 une masse battante M reliée à ces bras par des sections élastiques 5 en caoutchouc. Par rapport à la courbe standard visible en trait plein sur le diagramme de la figure 8, on voit que la réponse de ce dispositif à masse battante M (courbe en tirets) présente certes un creux de raideur vers 150 Hz, mais présente aussi un pic de raideur sensible vers 120 ou 130 Hz, ce qui là encore est préjudiciable à la bonne filtration du dispositif à ces fréquences.

Le but de l'invention est de perfectionner ce type de dispositif en éliminant ce pic de raideur ou en le déplaçant dans des fréquences plus élevées, où il ne sera plus gênant. En d'autres termes on souhaite pouvoir calculer la masse battante ainsi que sa situation pour obtenir un creux de raideur, puis un pic de phase, avant le pic de raideur, c'est-à-dire à une fréquence plus faible.

Pour atteindre ce résultat, un dispositif conforme à la revendication 1, du type général défini au début, est caractérisé en ce qu'il comporte au moins une barre transversale portant une masse antibattante, l'extrémité de cette barre qui est opposée à ladite masse étant incluse en une zone dudit corps soumise à des vibrations et cette barre étant maintenue, en un emplacement situé entre ladite zone et ladite masse, par une partie relativement fixe dudit corps, formant pivot.

Le principe de l'invention réside donc dans le fait que la masse fixée au dispositif - grâce à la fonction de levier de ladite barre transversale - se déplace en sens inverse des sollicitations vibratoires s'exerçant sur le dispositif, ce phénomène s'amplifiant aux basses fréquences.

Le schéma théorique d'un dispositif de suspension conforme à l'invention est représenté à la figure 9 ;
- la figure 10 montre un premier mode de réalisation pratique d'un dispositif conforme à l'invention ;
- la figure 11 est un diagramme montrant l'évolution de la raideur K de ce dispositif en fonction de la fréquence f des vibrations ;
- la figure 12 est un diagramme de la phase ϕ en fonction de la fréquence f ; et
- la figure 13 montre un second mode de réalisation pratique du dispositif.

Sur la figure 9 on a encore schématisé en 6 la caisse du véhicule et en 7 la tubulure d'échappement. Le dispositif de suspension, comportant un corps élastique supposé à deux branches parallèles, peut être représenté par la mise en série de deux ressorts R montés en parallèle sur deux amortisseurs C montés également en série. Une masse antibattante M est fixée à l'extrémité d'une barre rigide 8 dont l'extrémité opposée 9 est incluse dans une zone médiane du corps à deux branches, soumise aux vibrations (flèche F) émanant de la tubulure 7. Conformément à la revendication 1, la barre 8 est maintenue, en un emplacement situé entre la masse M et son extrémité 9, par une partie formant pivot 10, représentée arbitrairement comme fixée à la caisse 6 du véhicule.

Avec cette disposition de l'invention on voit que toute vibration verticale s'exerçant sur l'extrémité 9 de la barre 8 se traduira au niveau de la masse M par une vibration en sens inverse ; il s'agit donc bien d'une masse "antibattante".

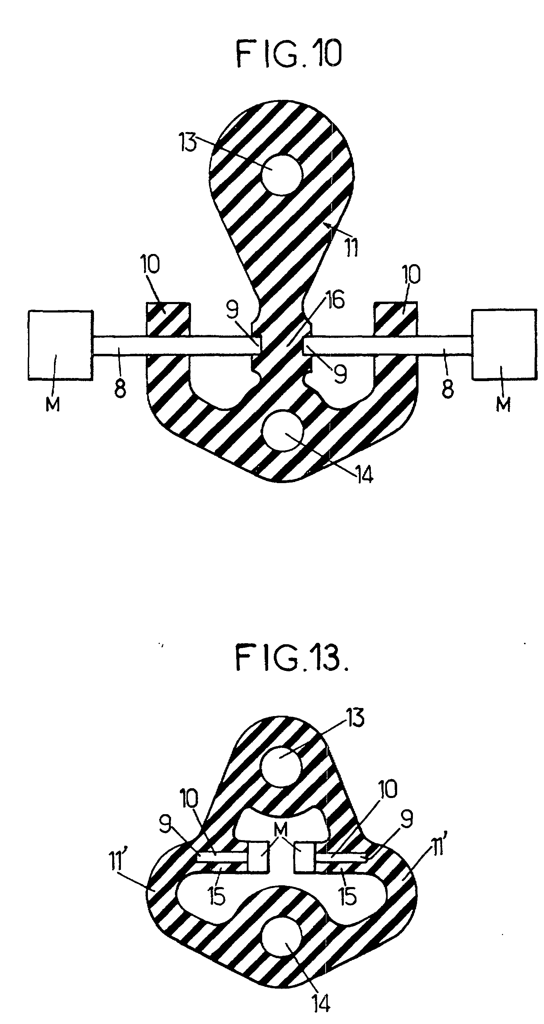

Dans le mode de réalisation pratique de la figure 10 on a représenté un dispositif de suspension à corps de caoutchouc allongé 11 en forme générale d'ancre à deux branches 10. Les trous 13 et 14 permettent le passage d'organes d'accrochage quelconques d'une part à la caisse d'un véhicule, d'autre part à sa tubulure d'échappement (non représentées sur cette figure). Deux barres rigides 8, par exemple en acier revêtu de caoutchouc, sont encastrées par leurs extrémités 9 dans la zone médiane 16 du corps 11, soumise aux vibrations. Ces barres 8 traversent les branches 10 formant pivots et portent à chacune de leurs extrémités extérieures une masse antibattante M faisant par exemple partie intégrante de la barre correspondante 8 et pouvant également être enrobée de caoutchouc pour éviter la corrosion. Il est à noter que le rôle de pivot des branches 10 pourrait être accru en rigidifiant ces branches par une armature intérieure les reliant l'une à l'autre.

Avec un tel montage on obtient les réponses en raideur K et en phase ϕ représentées respectivement sur les figures 11 et 12, avec les mêmes conventions que précédemment. On voit que grâce à l'invention on obtient un creux de raideur marqué aux environs de la fréquence favorable de 60 Hz (bon filtrage du ralenti), et une augmentation corrélative de la phase à la même fréquence, ce pic de phase permettant d'amortir le mode en hachis de ligne.

Des résultats analogues peuvent être obtenus avec le mode de réalisation de la figure 13, dans lequel le corps élastique 11' du dispositif a la forme d'un anneau avec deux bras rentrants 15 incorporant les deux barres rigides 8 portant aux extrémités intérieures de ces bras les masses antibattantes M. Les extrémités 9 de ces barres sont soumises aux vibrations de la tubulure d'échappement, et leur pivot est situé en une zone intermédiaire, encore référencée 10. Ce mode de réalisation présente sur le précédent l'avantage d'un moindre encombrement, et les masses métalliques peuvent être entièrement incorporées dans le caoutchouc du corps 11'.

## Revendications

1. Dispositif de suspension élastique pour tubulure d'échappement de véhicule ayant un moteur à combustion interne, comprenant un corps élastique muni de moyens d'accrochage d'une part à la caisse du véhicule, d'autre part à ladite tubulure, **caractérisé en ce qu'**il comporte au moins une barre transversale (8) portant une masse antibattante (M), l'extrémité (9) de cette barre qui est opposée à ladite masse (M) étant incluse en une zone (16) dudit corps soumise à des vibrations et cette barre (8) étant maintenue, en un emplacement situé entre ladite zone (16) et ladite masse (M), par une partie (10) relativement fixe dudit corps, formant pivot.

2. Dispositif selon la revendication 1, **caractérisé en ce que** ledit corps élastique (11) a la forme générale d'une ancre à deux branches (10), chacune d'elles étant traversée, en constituant un pivot, par une barre rigide (8) portant à son extrémité libre une masse antibattante (M), l'extrémité opposée (9) de ladite barre étant encastrée dans une zone médiane (16) du corps (11), soumise aux vibrations.

3. Dispositif selon la revendication 1, **caractérise en ce que** ledit corps élastique (11') a la forme générale d'un anneau à deux bras rentrants (15), lesquels incorporent chacun une barre rigide (8) portant à son extrémité intérieure une masse antibattante (M), l'extrémité opposée (9) de la barre correspondante étant incluse dans une zone soumise aux vibrations.

4. Dispositif selon l'une quelconque des revendications précédentes, **caractérisé en ce que** ladite barre (8) et ladite masse (M) sont enrobées de caoutchouc.

## Patentansprüche

1. Elastische Aufhängung für Auspuffrohre von Fahrzeugen mit einem Verbrennungsmotor, bestehend aus einem elastischen Körper, der mit Befestigungsmitteln zur Befestigung einerseits an der Fahrzeugkarosserie und andererseits an diesem Auspuffrohr versehen ist,
**dadurch gekennzeichnet,**
**dass** sie mindestens eine Querstange (8) aufweist, an der eine schlagdämpfende Masse (M) sitzt, wobei das von dieser Masse (M) abgewandte Ende (9) dieser Stange in einem Bereich (16) dieses Körpers, der Vibrationen ausgesetzt ist, eingeschlossen ist und diese Stange (8) an einer Stelle zwischen diesem Bereich (16) und dieser Masse (M) von einem Teil (10) dieses Körpers gehalten wird, der relativ feststehend ist und einen Drehpunkt bildet.

2. Aufhängung nach Anspruch 1,
**dadurch gekennzeichnet,**
**dass** dieser elastische Körper (11) allgemein die Form eines Ankers mit zwei Schenkeln (10) aufweist, wobei durch diese Schenkel, die dabei einen Drehpunkt bilden, jeweils eine starre Stange (8) verläuft, an deren freiem Ende eine schlagdämpfende Masse (M) sitzt, wobei das andere Ende (9) dieser Stange in einem mittleren Bereich (16) des Körpers (11), der Vibrationen ausgesetzt ist, eingeschlossen ist.

3. Aufhängung nach Anspruch 1,
**dadurch gekennzeichnet,**
**dass** dieser elastische Körper (11) allgemein die Form eines Rings mit zwei nach innen verlaufenden Armen (15) besitzt, in welchen jeweils eine starre Stange (8) eingebaut ist, an deren innerem Ende eine schlagdämpfende Masse (M) sitzt, wobei das andere Ende (9) dieser Stange in einem Bereich, der Vibrationen ausgesetzt ist, eingeschlossen ist.

4. Aufhängung nach einem der vorherigen Ansprüche,
**dadurch gekennzeichnet,**
**dass** die genannte Stange (8) und die genannte Masse (M) mit Gummi überzogen sind.

## Claims

1. Device comprising a resilient suspension for an exhaust manifold of a vehicle provided with an internal combustion engine, including a resilient body provided with means of hooking, on one hand to the structure of the vehicle, on the other hand to said pipe, **characterised in that** it comprises at least a transverse rod (8) carrying an anti-beating mass (M), the end (9) of this rod which is opposite to said mass (M) being embedded in a zone (16) of said body subjected to vibrations, and this rod (8) being maintained, in a place situated between said zone (16) and said mass (M), by a relatively fixed part (10) of said body, forming a pivot.

2. Device according to claim 1, **characterised in that** said resilient body (11) has the general shape of an anchor with two branches (10), each of which is passed through, while forming a pivot, by a rigid rod (8) bearing at its free end an anti-beating mass (M), the opposite end (9) of said rod being built in a median zone (16) of said body (11), subjected to the vibrations.

3. Device according to claim 1. **characterised in that** said resilient body (11') has the general shape of a ring with two re-entering arms (15) each of which includes a rigid rod (8) bearing at its internal end an anti-beating mass (M), the opposite end (9) of the corresponding rod being included in a zone subjected to the vibrations.

4. Device according to any one of the preceding claims, **characterised in that** said rod (8) and said mass (M) are embedded in rubber.
